# EUROPÄISCHE PATENTSCHRIFT

(11) **EP 1 789 223 B1**
(45) Veröffentlichungstag und Bekanntmachung des Hinweises auf die Patenterteilung: **28.09.2011**
(21) Anmeldenummer: 05775347.7
(22) Anmeldetag: 16.08.2005
(51) Int. Cl.: B23B 31/107, B23B 31/00

(54) **WERKZEUGTRÄGER FÜR WERKZEUGE BEI WERKZEUGMASCHINEN**
TOOL SUPPORT FOR TOOLS ON MACHINE TOOLS
PORTE-OUTILS DESTINE A DES OUTILS DE MACHINES-OUTILS

(30) Priorität: 02.09.2004 DE 102004042520
(43) Veröffentlichungstag der Anmeldung: 30.05.2007
(73) Patentinhaber: WTO Werkzeug-Einrichtungen GmbH, 77797 Ohlsbach (DE)
(72) Erfinder: JANSEN, Karlheinz, 77746 Schutterwald/Langhurst (DE); MAIER, Klaus, 77656 Offenburg (DE)
(74) Vertreter: Goy, Wolfgang
(86) Internationale Anmeldenummer: PCT/DE2005/001445
(87) Internationale Veröffentlichungsnummer: WO 2006/024259

(56) Entgegenhaltungen:
- EP-B1- 1 768 808
- WO-A-2006/008059
- WO-A1-2006/008059
- CH-A- 553 022
- DE-A1- 3 019 970
- DE-U- 7 513 937
- DE-U1- 20 314 093
- GB-A- 2 171 937
- US-A- 2 167 014
- US-A- 5 468 102
- US-A- 5 556 223
- US-A- 5 567 093
- US-A1- 2004 124 592
- US-B1- 6 299 180

## Beschreibung

Die Erfindung betrifft einen Werkzeugträger für Werkzeuge bei Werkzeugmaschinen nach dem Oberbegriff des Anspruchs 1.

Werkzeugträger dienen der Aufnahme von feststehenden oder umlaufenden Werkzeugen zur Bearbeitung von Werkstücken. Bei diesen Werkzeugen kann es sich um Bohrer, Fräser, Sägeblätter oder andere Schneidwerkzeuge handeln, welche zur Bearbeitung von Werkstücken allgemein vorgesehen und geeignet sind.

Die DE 203 14 093 U1 zeigt einen Werkzeugadapter für rotierende Bohr- und/oder Fräswerkzeuge der eingangs angegebenen Art. Das System sieht dabei eine Werkzeugaufnahme mit eine Innenkonus sowie mit einer stirnseitigen Anschlagfläche vor. Diese Werkzeugaufnahme weist weiterhin radiale Gewindebohrungen auf. In den Innenkonus der Werkzeugaufnahme wird der Konus eines Werkzeugspanneinsatzes für das Werkzeug eingesetzt und mittels in die radialen Gewindebohrungen eingedrehte Spannbolzen fixiert. Dabei greifen die Spannbolzen im Spannzustand an der konischen Umfangsmantelfläche des Werkzeugspanneinsatzes an.

Die WO 2006/008059 A1 zeigt einen Werkzeugadapter zur Befestigung an einer stirnseitig vorgesehenen Werkzeugaufnahme. Der Werkzeugadapter weist dabei einen Kegelabschnitt auf, an welchen sich zur Werkzeugseite hin ein zylindrischer Bund anschließt. Der Kegelabschnitt dient zur Führung und Ausrichtung des Werkzeugadapters bezüglich der Werkzeugaufnahme. Zur Befestigung des Werkzeugadapters in der Werkzeugaufnahme sind im Bereich des zylindrischen Bundes radiale Querbohrungen in Form von Gewindebohrungen vorgesehen. Hierzu korrespondierend weist der zylindrische Bund Kegelbohrungen auf. Zur Fixierung dienen Spannbolzen welche in die Gewindebohrungen der Werkzeugaufnahme eingeschraubt werden. Diese greifen mit ihren Kegelabschnitten in die Kegelbohrungen im zylindrischen Bund des Werkzeugadapters spannend ein.

Ein weiterer Werkzeugträger für Werkzeuge bei Werkzeugmaschinen ist aus der DE 102 19 600 B4 bekannt. Dieser Werkzeugträger weist eine Werkzeugträgeraufnahme mit einer konischen Innenbohrung auf. Diese konische Innenbohrung dient zur Aufnahme einer Werkzeugträgeraufnahme in Form einer Spannzange. Zum Fixieren des Werkzeugspanneinsatzes in der Werkzeugträgeraufnahme dienen Spannschrauben. Zu diesem Zweck weist der Werkzeugspanneinsatz achsparallele Bohrungen auf, durch welche hindurch Spannschrauben hindurchgesteckt und stirnseitig in die Werkzeugträgeraufnahme eingeschraubt werden. Dabei liegen die Werkzeugträgeraufnahme und der Werkzeugspanneinsatz stirnseitig über korrespondierende Planflächen aneinander an. - Bei einem Wechsel des Werkzeugspanneinsatzes müssen die Spannschrauben vollständig herausgeschraubt werden. Dies erhöht zum einen die Wechselzeiten erheblich, zum anderen können die Spannschrauben verloren gehen. Darüber hinaus ist die Zugänglichkeit der Spannschrauben dann nicht mehr gegeben, wenn der Schneidwerkzeugdurchmesser (z. B. ein Sägeblatt) den Teilkreis der Spannschrauben überschreitet.

Der Erfindung liegt die Aufgabe zugrunde, bei einem Werkzeugträger für Werkzeuge bei Werkzeugmaschinen der eingangs angegebenen Art die Wirkungsweise sowie die Handhabung der Spannschrauben zu verbessern.

Die technische Lösung ist gekennzeichnet durch die Merkmale im Kennzeichen des Anspruchs 1.

Die Grundidee des erfindungsgemäßen Werkzeugträgers für Werkzeuge bei Werkzeugmaschinen besteht darin, daß die Fixierung des Werkzeugspanneinsatzes in der Werkzeugträgeraufnahme seitlich erfolgt, wobei die Spannschrauben durch entsprechende Gewindebohrungen hindurch den Werkzeugspanneinsatz im Mantelbereich festlegen. Dabei ist wenigstens eine Spannschraube, vorzugsweise mehrere Spannschrauben, typischerweise 2 oder 3 Spannschrauben vorgesehen, welche gleichmäßig um den Umfang verteilt angeordnet sind. Die Spannschraube greifen dabei nicht am eigentlichen konischen Körper an, sondern an einem vorderseitigen zylindrischen Ansatz im Bereich, d.h. kurz hinter der planen Anlagefläche zwischen dem Werkzeugspanneinsatz und der Werkzeugträgeraufnahme. Die Spannschrauben weisen dabei am vorderen Ende einen Spannkonus und die Umfangsmantelfläche des Werkzeugspanneinsatzes einen hierzu korrespondierenden Innenkonus auf. Dadurch ist zum einen eine sichere Fixierung und zum anderen eine reproduzierbare Verspannung zwischen der Werkzeugträgeraufnahme und dem Werkzeugspanneinsatz realisiert. Der große Vorteil dieser Fixiereinrichtung besteht darin, daß die Spannschrauben bei einem Wechsel des Werkzeugspanneinsatzes nur gelöst und nicht vollständig herausgeschraubt werden müssen. Dies reduziert zum einen die Wechselzeit des Werkzeugspanneinsatzes erheblich, zum anderen gehen die Spannschrauben nicht verloren. Außerdem können die Spannschrauben in der Werkzeugträgeraufnahme verbleiben, wenn ohne Werkzeugspanneinsatz gearbeitet wird. Die Spannschrauben schützen dann die Gewindebohrung vor Verschmutzung. Ein weiterer großer Vorteil besteht darin, daß unabhängig vom Durchmesser des Schneidwerkzeugs die Spannschrauben immer erreichbar sind und somit die Zugänglichkeit immer gewährleistet ist.

Eine erste Variante in der Anordnung der Spannschrauben sieht gemäß der Weiterbildung in Anspruch 2 vor, daß die Achse der Gewindebohrung senkrecht zur Werkzeugachse steht. Dadurch ist eine radiale Anordnung der Spannschrauben realisiert.

Alternativ können gemäß Anspruch 3 die Spannschrauben auch schräg angeordnet sein, und zwar vorzugsweise schräg von vorne. Durch die leichte Neigung der Spannschrauben wird noch mehr Platz eingespart, so daß sich durch die Verkürzung in axialer Richtung die Gesamtlänge weiterhin verkürzt. Durch die nur relativ geringe Neigung ist nach wie vor ein weitgehend ungehinderter Zugang zu den Spannschrauben möglich. Bei geeigneter Wahl des Neigungswinkels (z. B. 30° zur Radialen) können auch Normschrauben statt Sonderschrauben als Spannschrauben verwendet werden.

Die Grundidee der Weiterbildung gemäß Anspruch 4 besteht darin, daß beim Fixieren des Werkzeugspanneinsatzes in der Werkzeugträgeraufnahme zugleich eine Verspannung der beiden vorgenannten Teile erfolgt, indem der Werkzeugspanneinsatz axial ins Innere der Werkzeugträgeraufnahme hineinbewegt wird.

Eine bevorzugte Weiterbildung schlägt Anspruch 5 vor. Dadurch ist die Fixierung des Werkzeugspanneinsatzes in der Werkzeugträgeraufnahme sehr flexibel gestaltet. Denn das Fixiersystem ist unabhängig davon, welche Ausrichtung die Gewindebohrung der Spannschraube in der Werkzeugträgeraufnahme besitzt. Denn das Vorderende der Spannschraube ist immer in ein und derselben Ausnehmung festlegbar, welche in dem Werkzeugspanneinsatz ausgebildet ist. Dies bedeutet in der Praxis, daß für eine Werkzeugträgeraufnahme mit einer anderen Ausrichtung für die Spannschraube kein entsprechender Werkzeugspanneinsatz zur Verfügung gestellt werden muß. Vielmehr kann ein und derselbe Werkzeugspanneinsatz für Werkzeugträgeraufnahmen mit unterschiedlichen Ausrichtungen der Gewindebohrungen verwendet werden.

Dabei weist der Werkzeugspanneinsatz gemäß der Weiterbildung in Anspruch 6 vorzugsweise rückseitig einen Zylinderansatz auf. Dieser Zylinderansatz stützt sich zusätzlich an einer korrespondierenden Bohrung in der Werkzeugträgeraufnahme ab. Die Passungen und Lagetoleranzen der Teile werden zweckmäßigerweise derart gewählt, daß eine Abstützung zustande kommt. Dies ist vor allem dann von Vorteil, wenn beim Fräsen große Querkräfte entstehen oder bei großen Auskraglängen. Durch diese zusätzliche Stützwirkung wird eine wesentlich verbesserte Fräsgenauigkeit und Frässtabilität erzielt.

Die Weiterbildung hiervon gemäß Anspruch 7 schlägt eine Abdichtung vor. Dies ist dann von Vorteil, wenn durch die Werkzeugträgeraufnahme von der Rückseite her durch eine Kanalbohrung Kühlmittel mit hohen Drücken, typischerweise 10 bar bis zu mehreren 100 bar, für die Kühlung von Schneidwerkzeugen mit Innenkühlung zugeführt wird. Durch den hohen Druck könnte ohne Verwendung der Abdichtung nicht ausgeschlossen werden, daß der beaufschlagende Druck eine sehr große Axialkraft erzeugt, die wesentlich größer ist als die Spannkraft oder gar Bruchkraft der Spannschrauben.

Bei Werkzeugspanneinsätzen mit zylindrischer Bohrung oder mit einem Innenkonus für Spannzangen kann gemäß der Weiterbildung in Anspruch 8 vorzugsweise eine Einstellschraube direkt in den Werkzeugspanneinsatz eingesetzt werden. Mit dieser Einstellschraube kann die Länge des Schneidwerkzeugs bereits vor der Montage des Werkzeugspanneinsatzes in die Werkzeugträgeraufnahme voreingestellt werden. Dieser verkürzt den Wechselvorgang und damit die Stillstandszeit einer Werkzeugmaschine erheblich. Sollten die Axialkräfte bei der Bearbeitung größer sein als die Spannkräfte, so dient die Einstellschraube zusätzlich als Längenanschlag, so daß das Schneidwerkzeug nicht weiter in den Werkzeugspanneinsatz gedrückt werden kann.

Schließlich schlägt die Weiterbildung gemäß Anspruch 9 eine umfangsseitige Zentrierung vor. Der Positionierstift hat die Aufgabe, eine eindeutige Lageorientierung zwischen dem Werkzeugspanneinsatz und der Werkzeugträgeraufnahme zu erzielen. Dies ist von Vorteil, um einen unnötigen Suchvorgang beim Einschrauben der Spannschrauben zu vermeiden. Nur wenn die Lage des Positionierstiftes mit der Lage der Gewindebohrung übereinstimmt, ist eine Montage möglich. Bei lageorientierten Werkzeugen (z. B. Bohrstangen) im Einsatz bei Großserien ist diese eindeutige Positionierung für die Sicherstellung des Prozesses von großem Vorteil.

Ausführungsbeispiele eines erfindungsgemäßen Werkzeugträgers für Werkzeuge bei Werkzeugmaschinen werden nachfolgend anhand der Zeichnungen beschrieben. In diesen zeigt:
- Fig. 1: eine Längsschnittdarstellung durch den Werkzeugträger in ei- ner ersten Ausführungsform;
- Fig. 2a: ein Detailausschnitt aus Fig. 1 im Bereich der Spannschraube im nicht gespannten Zustand;
- Fig. 2b: eine Darstellung entsprechend der in Fig. 2a, die Spann- schraube jedoch im gespannten Zustand;
- Fig. 3: der Werkzeugträger in Fig. 1, jedoch in einem Schnitt durch eine andere Schnittebene;
- Fig. 4: einen Längsschnitt durch den Werkzeugträger in einer zweiten Ausführungsform;
- Fig. 5a: ein Detailausschnitt aus Fig. 4 im Bereich der Spannschraube, wobei sich diese im gespannten Zustand befindet;
- Fig. 5b: eine Darstellung entsprechend der in Fig. 5a, die Spann- schraube jedoch in nicht gespanntem Zustand.

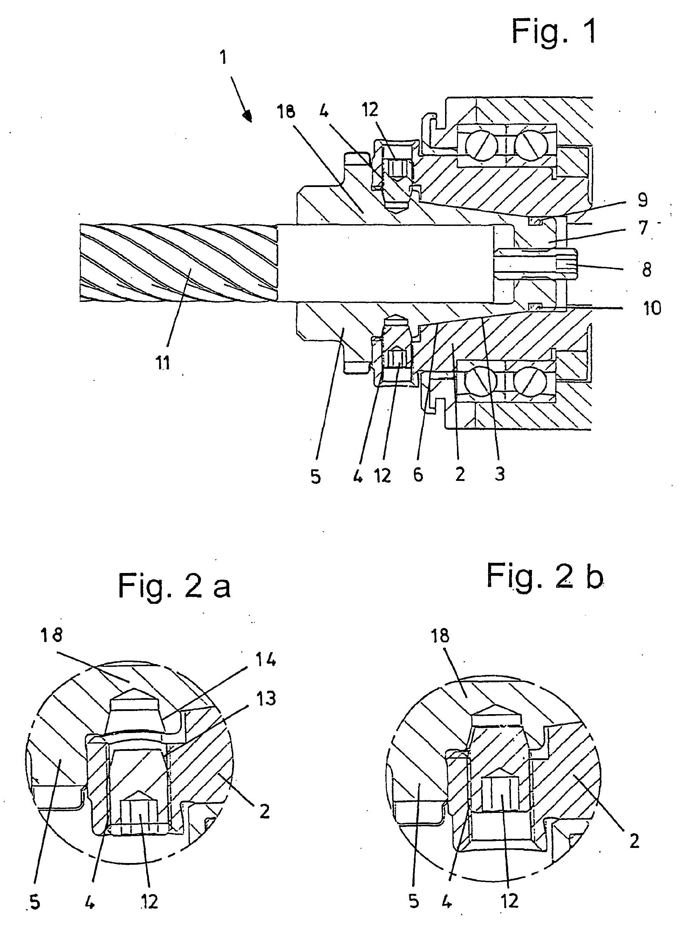

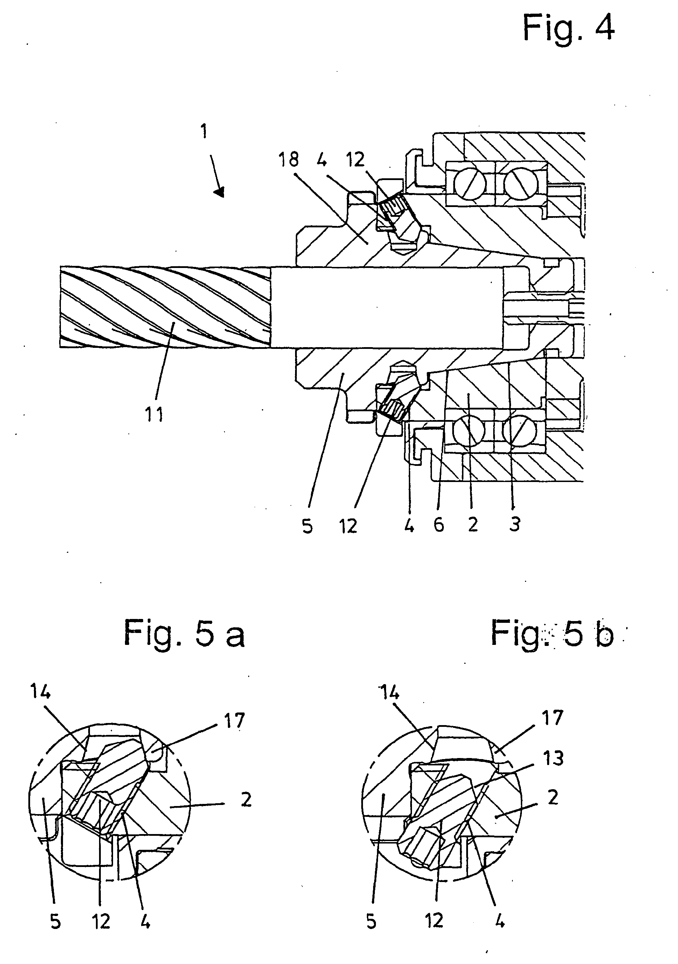

In den Fig. 1 bis 3 ist eine erste Ausführungsform und in den Fig. 4 und 5 eine zweite Ausführungsform eines Werkzeugträgers für Werkzeuge bei Werkzeugmaschinen dargestellt.

Die erste Ausführungsform in den Fig. 1 bis 3 zeigt einen Werkzeugträger 1 mit einer drehbaren Werkzeugträgeraufnahme 2. Diese Werkzeugträgeraufnahme 2 weist einen Innenkonus 3 auf. Im vorderen Bereich der Werkzeugträgeraufnahme 2 weist diese radiale Gewindebohrungen 4 auf.

Der Werkzeugträger 1 weist weiterhin einen Werkzeugspanneinsatz 5 auf. Dieser ist mit einem Außenkonus 6 im Innenkonus 3 der Werkzeugträgeraufnahme 2 festgelegt. Am hinteren Ende besitzt der Werkzeugspanneinsatz 5 einen Zylinderansatz 7. In dessen Boden befindet sich eine längsverstellbare Einstellschraube 8. Um den Umfang herum weist der Zylinderansatz 7 des Werkzeugspanneinsatzes 5 noch eine Umfangsnut 9 auf, in welcher sich ein O-Ring 10 befindet. Am vorderen Ende besitzt der Werkzeugspanneinsatz 5 einen zylindrischen Ansatz 18.

Das dem Werkzeugträger 1 zugeordnete Werkzeug 11 ist in der zentralen Bohrung des Werkzeugspanneinsatzes 5 festgelegt. Im dargestellten Ausführungsbeispiel handelt es sich bei diesem Werkzeug 11 um einen Bohrer. Statt dessen sind auch andere Werkzeuge 11, wie beispielsweise Fräser oder Sägeblätter denkbar. Beim Werkzeugspanneinsatz 5 kann es sich beispielsweise um eine Spannzangenaufnahme handeln.

Die Funktionsweise ist wie folgt:

Der Werkzeugspanneinsatz 5 mit seinem Werkzeug 11 soll im Innenkonus 3 der Werkzeugträgeraufnahme 2 fixiert werden, nachdem beispielsweise ein Wechsel des Werkzeugspanneinsatzes 5 erfolgt ist. Zur Fixierung dienen Spannschrauben 12, welche in die Gewindebohrungen 4 eingedreht sind.

Der nicht gespannte Zustand dieser Spannschrauben 12 ist in Fig. 2a dargestellt. Es ist erkennbar, daß die Spannschrauben 12 vorderseitig einen Spannkonus 13 aufweisen. Mit diesem Spannkonus 13 korrespondiert in der Außenmantelfläche des Werkzeugspanneinsatzes 5 eine Ausnehmung in Form eines Innenkonus 14.

In dieser nicht ganz herausgedrehten Position der Spannschrauben 12 kann der Werkzeugspanneinsatz 5 mit seinem Werkzeug 11 aus dem Innenkonus 3 der Werkzeugträgeraufnahme 2 herausgenommen und ein anderer Werkzeugspanneinsatz 5 eingesetzt werden. Nach dem Einführen des Werkzeugspanneinsatzes 5 in den Innenkonus 4 der Werkzeugträgeraufnahme 2, wobei die Einstellschraube 8 als Anschlag für das Werkzeug 11 dient und wobei die Werkzeugträgeraufnahme 2 und der Werkzeugspanneinsatz 5 stirnseitig in Plananlage aneinanderliegen, erfolgt die Fixierung und Zentrierung dergestallt, daß die Spannschrauben 12 eingedreht werden, bis der jeweilige Spannkonus 13 der Spannschraube 12 im Innenkonus 14 des Werkzeugspanneinsatzes 5 im Bereich des zylindrischen Ansatzes 18 zu liegen kommt. Diese Situation ist in Fig. 2b dargestellt. Dabei wird durch den Spannkonus 13 mit dem korrespondierenden Innenkonus 14 der Werkzeugspanneinsatz 5 in der Zeichnung nach rechts verschoben, was durch die Spaltbildung zwischen dem Spannkonus 13 und dem Innenkonus 14 auf der linken Seite der Spannschraube 12 in der Zeichnung angedeutet ist.

Im fixierten Zustand kommt der Zylinderansatz 7 des Werkzeugspanneinsatzes 5 in einer korrespondierenden Zylinderausnehmung der Werkzeugträgeraufnahme 2 zu liegen. Dieser Zylinderansatz 7 dient dabei als Abstützung bei großen Querkräften. Dadurch wird eine sehr hohe Fräsgenauigkeit und Frässtabilität erzielt.

Der O-Ring 10 dient als Dichtung zwischen dem Werkzeugspanneinsatz 5 und der Werkzeugträgeraufnahme 2, wenn beispielsweise Kühlmittel mit hohen Drücken für die Kühlung des Werkzeugs 11 mit Innenkühlung zugeführt wird.

Bei einem erneuten Wechsel des Werkzeugspanneinsatzes 5 werden die Spannschrauben 12 etwas herausgedreht (wie dies in Fig. 2a dargestellt ist), so daß der Werkzeugspanneinsatz 5 wieder freigegeben ist.

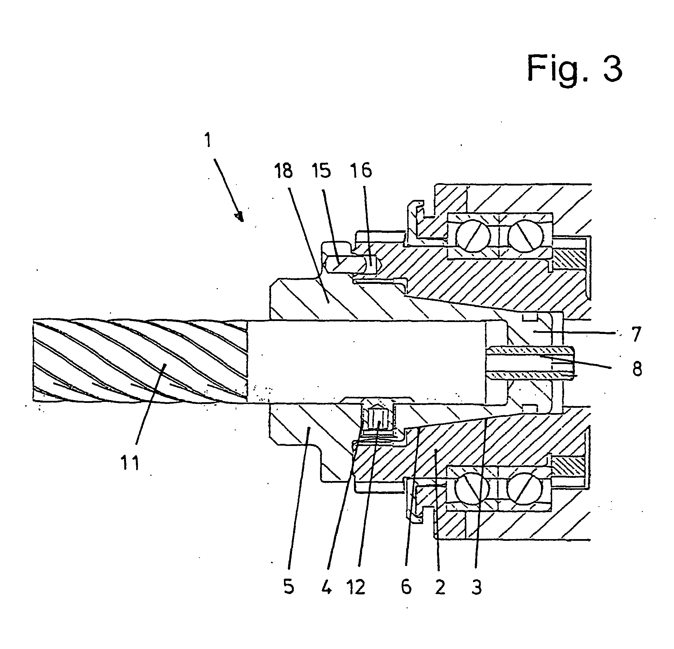

Die Darstellung in Fig. 3 mit einer etwas anderen Schnittebene zeigt einen Positionierstift 15, welcher im Bereich der Planflächen achsparallel in der Werkzeugträgeraufnahme 2 nach hinten gerichtet angeordnet ist. Zu diesem Positionierstift 15 korrespondiert eine stirnseitige Ausnehmung 16 in der Werkzeugträgeraufnahme 2. Dieser Positionierstift 15 hat die Aufgabe, eine eindeutige Lageorientierung zwischen dem Werkzeugspanneinsatz 15 und der Werkzeugträgeraufnahme 2 zu erzielen. Dies ist von Vorteil, um einen unnötigen Suchvorgang beim Einschrauben der Spannschrauben 12 in die Gewindebohrungen 4 zu vermeiden. Nur wenn die Lage des Positionierstiftes 15 mit der Ausnehmung 16 übereinstimmt, ist eine Montage möglich.

Die Ausführungsform in den Fig. 4 und 5 unterscheidet sich von der ersten Ausführungsform in der Ausrichtung der Gewindebohrungen 4 bzw. in der Ausrichtung der Spannschrauben 12. Während bei der ersten Ausführungsform die Ausrichtung der Spannschrauben 12 exakt radial, d. h. senkrecht zur Achse des Werkzeugs 11 ist, ist bei der zweiten Ausführungsform die Ausrichtung der Spannschrauben 12 um einen Winkel geneigt. Somit sind die Spannschrauben 12 schräg von vorne zugänglich. Der Winkel beträgt im dargestellten Ausführungsbeispiel ungefähr 30°.

Die Spannschraube 12 weist gleichermaßen am Vorderende einen Spannkonus 13 auf. Dazu korrespondierend weist der Werkzeugspanneinsatz 5 eine Anschlagfläche 17 auf, welche in der Ausnehmung in Form des Innenkonusses 14 des Werkzeugspanneinsatzes 5 ausgebildet ist. Wie in den Zeichnungen zu beiden Ausführungsformen erkennbar ist, ist die Ausnehmung mit dem Innenkonus 14 im Werkzeugspanneinsatz 5 derart ausgebildet, daß die Spannschraube 12 sowohl radial als auch schräg, insbesondere schräg von vorne eingedreht werden kann. Dies hängt von der Gewindebohrung 4 in der Werkzeugträgeraufnahme 2 ab.

Die Funktionsweise dieser zweiter Ausführungsform ist vom Grundprinzip her die gleiche wie bei der ersten Ausführungsform, d. h. bei einem Wechsel des Werkzeugspanneinsatzes 5 werden die Spannschrauben 12 etwas nach außen gedreht, so daß der Werkzeugspanneinsatz 5 frei wird und herausgenommen werden kann. Nach dem Einführen eines neuen Werkzeugspanneinsatzes 5 werden die Spannschrauben 12 wieder eingedreht, so daß sie im Bereich des zylindrischen Ansatzes 18 des Werkzeugspanneinsatzes 5 angreifen.

### Bezugszeichenliste

- 1: Werkzeugträger
- 2: Werkzeugträgeraufnahme
- 3: Innenkonus
- 4: Gewindebohrung
- 5: Werkzeugspanneinsatz
- 6: Außenkonus
- 7: Zylinderansatz
- 8: Einstellschraube
- 9: Umfangsnut
- 10: O-Ring
- 11: Werkzeug
- 12: Spannschraube
- 13: Spannkonus
- 14: Innenkonus
- 15: Positionierstift
- 16: Ausnehmung
- 17: Anschlagfläche
- 18: zylindrischer Ansatz

## Patentansprüche

1. Werkzeugträger (1) für Werkzeuge (11) bei Werkzeugmaschinen,
mit einer Werkzeugträgeraufnahme (2) mit wenigstens einer durchgehende Gewindebohrung (4), deren Achse einen Winkel mit der Drehachse des Werkzeugs (11) einschließt,
mit einem, im wesentlichen konischen sowie in der Werkzeugträgeraufnahme (2) angeordneten Werkzeugspanneinsatz (5) für das Werkzeug (11) sowie
mit einer in die jeweilige Gewindebohrung (4) eingedrehten Spannschraube (12) zum Fixieren des Werkzeugspanneinsatzes (5) in der Werkzeugträgeraufnahme (2), wobei die Spannschraube (12) am vorderen Ende einen Spannkonus (13) aufweist,
wobei der Werkzeugspanneinsatz (5) in der Umfangsmantelfläche einen zum Spannkonus (13) korrespondierenden Innenkonus (14) aufweist und
wobei die Spannschraube (12) im Spannzustand an der radialen Umfangsmantelfläche des Werkzeugspanneinsatzes (5) mit ihrem Spannkonus (13) an dem korrespondierenden Innenkonus (14) angreift und den Werkzeugspanneinsatz (5) axial verschiebt,
**dadurch gekennzeichnet,**
**daß** der Werkzeugspanneinsatz (5) vorderseitig einen im wesentlichen zylindrischen Ansatz (18) aufweist,
**daß** die Spannschrauben (12) an diesem zylindrischen Ansatz (18) angreifen und daß die Spannschrauben (12) bei einem Wechsel des Werkzeugspanneinsatzes (5) nur gelöst und nicht vollständig herausgeschraubt werden müssen.

2. Werkzeugträger nach Anspruch 1,
**dadurch gekennzeichnet,**
**daß** die Achse der Gewindebohrung (4) senkrecht zur Werkzeugachse steht.

3. Werkzeugträger nach Anspruch 1,
**dadurch gekennzeichnet,**
**daß** die Achse der Gewindebohrung (4) in Eindrehrichtung der Spannschraube (12) gesehen mit der Werkzeugachse einen Winkel kleiner als 90° oder einen Winkel größer als 90° einschließt.

4. Werkzeugträger nach einem der vorhergehenden Ansprüche,
**dadurch gekennzeichnet,**
**daß** Spannkonus (13) und Innenkonus (14) derart ausgebildet sind, daß im eingedrehten Zustand der Spannschraube (12) der Werkzeugspanneinsatz (5) in die Werkzeugträgeraufnahme (2) axial hineindrückbar ist.

5. Werkzeugträger nach einem der vorhergehenden Ansprüche,
**dadurch gekennzeichnet,**
**daß** in der Umfangsmantelfläche des Werkzeugspanneinsatzes (5) eine Ausnehmung derart ausgebildet ist, daß die entsprechend der Ausrichtung der Gewindebohrung (4) in der Werkzeugträgeraufnahme (2) unter unterschiedlichen Winkeln eingedrehte Spannschraube (12) mit ihrem Vorderende in ein und derselben Ausnehmung festlegbar ist.

6. Werkzeugträger nach einem der vorhergehenden Ansprüche,
**dadurch gekennzeichnet,**
**daß** der Werkzeugspanneinsatz (5) rückseitig einen Zylinderansatz (7) aufweist.

7. Werkzeugträger nach Anspruch 6,
**dadurch gekennzeichnet,**
**daß** der Zylinderansatz (7) eine Umfangsnut (9) für einen O-Ring (10) zur Abdichtung gegenüber der Werkzeugträgeraufnahme (2) aufweist.

8. Werkzeugträger nach einem der vorhergehenden Ansprüche,
**dadurch gekennzeichnet,**
**daß** der Boden des Werkzeugspanneinsatzes (5) eine axialverstellbare Einstellschraube (8) für das Werkzeug (11) aufweist.

9. Werkzeugträger nach einem der vorhergehenden Ansprüche,
**dadurch gekennzeichnet,**
**daß** stirnseitig zwischen der Werkzeugträgeraufnahme (2) und dem Werkzeugspanneinsatz (5) ein achsparalleler Positionierstift (15) mit korrespondierender Ausnehmung (16) angeordnet ist.

## Claims

1. Tool carrier (1) for tools (11) on machine tools,
with a tool carrier receiver (2) with at least one continuous threaded bore (4), the axis of which encloses an angle with the rotary axis of the tool (11),
with a substantially conical tool clamping insert (5) arranged in the tool carrier receiver (2) for the tool (11), and
with a clamping screw (12) screwed into the respective threaded bore (4) to fix the tool clamping insert (5) in the tool carrier receiver (2),
wherein the clamping screw (12) at the front end comprises a clamping cone (13),
wherein the tool clamping insert (5) in the peripheral casing surface comprises a conical socket (14) corresponding to the clamping cone (13), and
wherein the clamping screw (12) in the clamped state engages on the radial peripheral casing surface of the tool clamping insert (5) with its clamping cone (13) at the corresponding conical socket (14) and displaces the tool clamping insert (5) axially,
**characterised in that**
the tool clamping insert (5) on the front comprises a substantially cylindrical shoulder (18),
**in that** the clamping screws (12) engage on this cylindrical shoulder (18), and **in that** on a change of tool clamping insert (5), the clamping screws (12) need merely be loosened and not fully unscrewed.

2. Tool carrier according to claim 1, **characterised in that** the axis of the threaded bore (4) stands perpendicular to the tool axis.

3. Tool carrier according to claim 1, **characterised in that**, viewed in the screw-in direction of the clamping screw (12), the axis of the threaded bore (4) encloses with the tool axis an angle of less than 90° or an angle of more than 90°.

4. Tool carrier according to any of the preceding claims, **characterised in that** the clamping cone (13) and conical socket (14) are formed such that with the clamping screw (12) screwed in, the tool clamping insert (5) can be pressed axially into the tool carrier receiver (2).

5. Tool carrier according to any of the preceding claims, **characterised in that** in the peripheral casing surface of the tool clamping insert (5) is formed a recess such that when the clamping screw (12) is screwed into the tool carrier receiver (2) at various angles according to the alignment of the threaded bore (4), it can be fixed with its front end in one and the same recess.

6. Tool carrier according to any of the preceding claims, **characterised in that** the tool clamping insert (5) comprises on its rear a cylindrical shoulder (7).

7. Tool carrier according to claim 6, **characterised in that** the cylindrical shoulder (7) comprises a peripheral groove (9) for an O-ring (10) to seal against the tool carrier receiver (2).

8. Tool carrier according to any of the preceding claims, **characterised in that** the base of the tool carrier insert (5) comprises an axially adjustable set screw (8) for the tool (11).

9. Tool carrier according to any of the preceding claims, **characterised in that** on the face end between the tool carrier receiver (2) and the tool clamping insert (5) is arranged, axially parallel, a positioning pin (15) with corresponding recess (16).

## Revendications

1. Porte-outils (1) destiné à des outils (11) de machines-outils, comprenant un logement (2) dudit porte-outils, muni d'au moins un perçage taraudé ininterrompu (4) dont l'axe décrit un angle avec l'axe de rotation de l'outil (11),
une pièce intégrée (5) sensiblement tronconique, dédiée à l'ablocage de l'outil (11) et disposée dans ledit logement (2) du porte-outils, ainsi
qu'une vis de serrage (12) vissée dans le perçage taraudé respectif (4) en vue de consigner à demeure, dans ledit logement (2) dudit porte-outils, ladite pièce intégrée (5) d'ablocage de l'outil,
ladite vis de serrage (12) présentant un cône de serrage (13) à l'extrémité antérieure, ladite pièce intégrée (5) d'ablocage de l'outil étant pourvue, dans la surface de son enveloppe périphérique, d'un cône intérieur (14) concordant avec ledit cône de serrage (13), et
ladite vis de serrage (12) venant coopérer par son cône de serrage (13) avec le cône intérieur concordant (14), à l'état serré contre la surface radiale de l'enveloppe périphérique de la pièce intégrée (5) d'ablocage de l'outil, en imprimant un coulissement axial à ladite pièce intégrée (5) d'ablocage de l'outil,
**caractérisé par le fait**
**que** la face antérieure de la pièce intégrée (5) d'ablocage de l'outil est munie d'un appendice (18) sensiblement cylindrique,
**que** les vis de serrage (12) viennent coopérer avec cet appendice cylindrique (18), et
**que**, lors d'un remplacement de ladite pièce intégrée (5) d'ablocage de l'outil, lesdites vis de serrage (12) doivent être seulement desserrées, et non pas totalement dévissées.

2. Porte-outils selon la revendication 1,
**caractérisé par le fait**
**que** l'axe du perçage taraudé (4) est perpendiculaire à l'axe de l'outil.

3. Porte-outils selon la revendication 1,
**caractérisé par le fait**
**que** l'axe du perçage taraudé (4) décrit, avec l'axe de l'outil, un angle inférieur à 90° ou un angle supérieur à 90° en considérant dans la direction du vissage de la vis de serrage (12).

4. Porte-outils selon l'une des revendications précédentes,
**caractérisé par le fait**
**que** le cône de serrage (13) et le cône intérieur (14) sont réalisés de façon telle que la pièce intégrée (5) d'ablocage de l'outil puisse être enfoncée dans le logement (2) dudit porte-outils, dans le sens axial, à l'état vissé de la vis de serrage (12).

5. Porte-outils selon l'une des revendications précédentes,
**caractérisé par le fait**
**qu'**un évidement est ménagé dans la surface de l'enveloppe périphérique de la pièce intégrée (5) d'ablocage de l'outil, de façon telle que la vis de serrage (12), vissée suivant des angles différents en concordance avec l'orientation du perçage taraudé (4) pratiqué dans le logement (2) dudit porte-outils, puisse être consignée à demeure dans un seul et même évidement par son extrémité antérieure.

6. Porte-outils selon l'une des revendications précédentes,
**caractérisé par le fait**
**que** la face postérieure de la pièce intégrée (5) d'ablocage de l'outil est pourvue d'un appendice cylindrique (7).

7. Porte-outils selon la revendication 6,
**caractérisé par le fait**
**que** l'appendice cylindrique (7) offre une rainure périphérique (9), affectée à une bague torique (10) destinée à assurer l'étanchéité vis-à-vis du logement (2) dudit porte-outils.

8. Porte-outils selon l'une des revendications précédentes,
**caractérisé par le fait**
**que** le fond de la pièce intégrée (5) d'ablocage de l'outil présente une vis de réglage (8) mobile axialement, assignée à l'outil (11).

9. Porte-outils selon l'une des revendications précédentes,
**caractérisé par le fait**
**qu'**un pointeau de positionnement (15) parallèle à l'axe, associé à un évidement (16) concordant, est interposé frontalement entre le logement (2) dudit porte-outils et la pièce intégrée (5) d'ablocage de l'outil.
